# EUROPÄISCHE PATENTSCHRIFT

(11) **EP 0 992 187 B1**
(45) Veröffentlichungstag und Bekanntmachung des Hinweises auf die Patenterteilung: **23.04.2003**
(21) Anmeldenummer: 99116325.4
(22) Anmeldetag: 19.08.1999
(51) Int. Cl.: A01D 45/02

(54) **Maschine zum Mähen von Mais und dgl. stengelartigem Erntegut**
Machine for mowing maize and such stalk crops
Machine pour faucher le mais et les plantes à tiges similaires

(30) Priorität: 05.10.1998 DE 29817666 U
(43) Veröffentlichungstag der Anmeldung: 12.04.2000
(73) Patentinhaber: Maschinenfabrik Kemper GmbH & Co. KG, 48703 Stadtlohn (DE)
(72) Erfinder: Schulze-Hockenbeck, Leo, 48351 Everswinkel (DE); Wübbels, Richard, 46414 Rhede (DE)
(74) Vertreter: Holst, Sönke, Dr.

(56) Entgegenhaltungen:
- EP-A- 0 131 853
- EP-A- 0 454 602
- EP-A- 0 491 405
- EP-A- 0 534 199
- FR-A- 2 732 855
- US-A- 4 409 780

## Beschreibung

Die Erfindung betrifft eine Maschine zum Mähen von Mais und dgl. stengelartigem Erntegut gemäß des Oberbegriff des Anspruchs 1.

Derartige Mähmaschinen haben auf dem Feld eine Arbeitsbreite von bis zu 6 m. Da die geltenden Straßenverkehrsbestimmungen ein Verfahren solcher Maschinen auf öffentlichen Straßen mit einer solchen Arbeitsbreite nicht zulassen, ist es erforderlich, die Maschine vor ihrem Straßentransport mit ihren Einzugs- und Mähtrommeln in eine Transporstellung zu bringen, in der die Maschine mit ihrer Breite die für den Straßenverkehr zulässige maximale Breite von beispielsweise 3 m nicht überschreitet.

Bei einer bekannten Maschine der eingangs angegebenen Art kann die Transportstellung auf einfache Weise unter Vermeidung komplizierter Bewegungsabläufe und aufwendiger, verschleißanfälliger Maschinengestaltungen durch einen einfachen Klappvorgang mittels doppeltwirkender hydraulischer Arbeitszylinder herbeigeführt werden, wobei jedoch durch die in der Transportstellung senkrecht zum waagerechten Mittelteil des Grundrahmens stehenden Seitenteile einer weiteren Erhöhung der Arbeitsbreite etwa über 6 m hinaus dadurch Grenzen gesetzt sind, daß bei einer gegebenen und beibehaltenen Arbeitsbreite des Mittelteils von 3 m eine Erhöhung der Arbeitsbreite der Maschine nur durch Verbreiterung der Seitenteile dazu führen würde, daß die Maschine bei in die Transportstellung hochgeklappten Seitenteilen zu hoch bauen würde, woraus wiederum Konflikte mit den geltenden Straßenverkehrsbestimmungen bei einem Straßentransport der Maschine mittels eines die Maschine abstützenden landwirtschaftlichen Fahrzeugs, wie eines Schleppers oder Feldhäckslers, entstehen können.

Der Erfindung liegt die Aufgabe zugrunde, eine Mähmaschine der eingangs angegebenen Art zu schaffen, deren Arbeitsbreite mehr als 6 m betragen kann und die mit einfachen Mitteln unter Beachtung der Verkehrsbestimmungen in eine für den Straßentransport geeignete Transportstellung verbracht werden kann.

Diese Aufgabe wird nach der Erfindung durch eine Ausgestaltung der Maschine gemäß dem Patentanspruch 1 gelöst. Bei dieser Ausgestaltung ist einer Erhöhung der Gesamtarbeitsbreite der Maschine auf beispielsweise 7,50 m und darüber hinaus mit Blick auf eine straßenverkehrsgerechte Transportstellung ohne weiteres durch die beiden zusätzlichen Außenteile des Grundrahmens möglich, die jeweils an das angrenzende Seitenteil des Grundrahmens angelenkt sind und in der Transportstellung, bei senkrecht hochgeklappten Seitenteilen, eine gegenüber diesen einwärts verlagerte Transportstellung oberhalb des Mittelteils des Grundrahmens einnehmen, derart, daß die Außenteile des Grundrahmens in der Transportstellung der Maschine keine unzulässige Erhöhung der Seitenteile des Grundrahmens mit einer damit einhergehenden Sichtbehinderung des Fahrers des die Mähmaschine abstützenden Schleppers, Feldhäckslers oder dgl. landwirtschaftlichen Fahrzeugs hervorrufen.

Bei einem in der erfindungsgemäßen Weise ausgebildeten Grundrahmen kann die Mähmaschine in bevorzugter Ausgestaltung zehn Einzugs- und Mähtrommeln für eine Gesamtarbeitsbreite von etwa 7,50 m umfassen, wobei vier Trommeln auf dem festen Mittelteil, je zwei Trommeln auf den schwenkbaren Seitenteilen und je eine Trommel auf den ihrerseits schwenkbaren Außenteilen abgestützt sind.

Die Transportstellung kann im Bedarfsfall vom Fahrerhaus des die Maschine abstützenden Fahrzeugs in kinematisch günstiger Weise durch ein symmetrisches Einklappen der Seiten- und Außenteile des Grundrahmens mit den darauf abgestützten Einzugs- und Mähtrommeln mittels einfacher, wartungsarmer Drehgelenke über in Reihe geschaltete doppeltwirkende hydraulische Arbeitszylinder erfolgen, die selbstverriegelnd für jede erreichte Stellung ausgebildet sind, so daß keine zusätzlichen Mittel zur Verriegelung der Seiten- und Außenteile des Grundrahmens in ihrer Transport- oder Arbeitsstellung oder besondere Steuermittel für den Bewegungsablauf erforderlich sind. Damit einher geht eine automatische Kupplung des Antriebsstrangs der Maschine zur Unterbrechung des in üblicher Weise vom Fahrzeug abgeleiteten Antriebs der Einzugs- und Mähtrommeln für die Transportstellung bzw. Wiederherstellung der Antriebsverbindung für die Arbeitsstellung der Maschine bei einem neuen Feldeinsatz.

Weitere Merkmale und Vorteile der Erfindung ergeben sich aus den Ansprüchen und der nachstehenden Beschreibung in Verbindung mit der Zeichnung, in der ein Ausführungsbeispiel des Gegenstands der Erfindung schematisch veranschaulicht ist. In der Zeichnung zeigt:
- Fig. 1: eine perspektivische Prinzipdarstellung einer erfindungsgemäßen Mähmaschine in Verbindung mit einem strichpunktiert angedeuteten selbstfahrenden Feldhäcksler,
- Fig. 2: eine Rückansicht der Mähmaschine in Arbeitsstellung,
- Fig. 3: eine Rückansicht der Mähmaschine in einer Zwischenstellung zur Transportstellung,
- Fig. 4: eine Rückansicht der Mähmaschine in Transportstellung,
- Fig. 5: eine Draufsicht auf die Mähmaschine, abgestützt an einem Feldhäcksler, mit in ihrer Arbeitsstellung befindlichen Vordruckbügeln,
- Fig. 6: eine der Fig. 5 entsprechende Darstellung, wobei jedoch die Vordruckbügel nach hinten geschwenkt sind, und
- Fig. 7: eine Seitenansicht zu Fig. 5 bzw. 6 mit in ihrer Transportstellung befindlichen Vordruckbügeln.

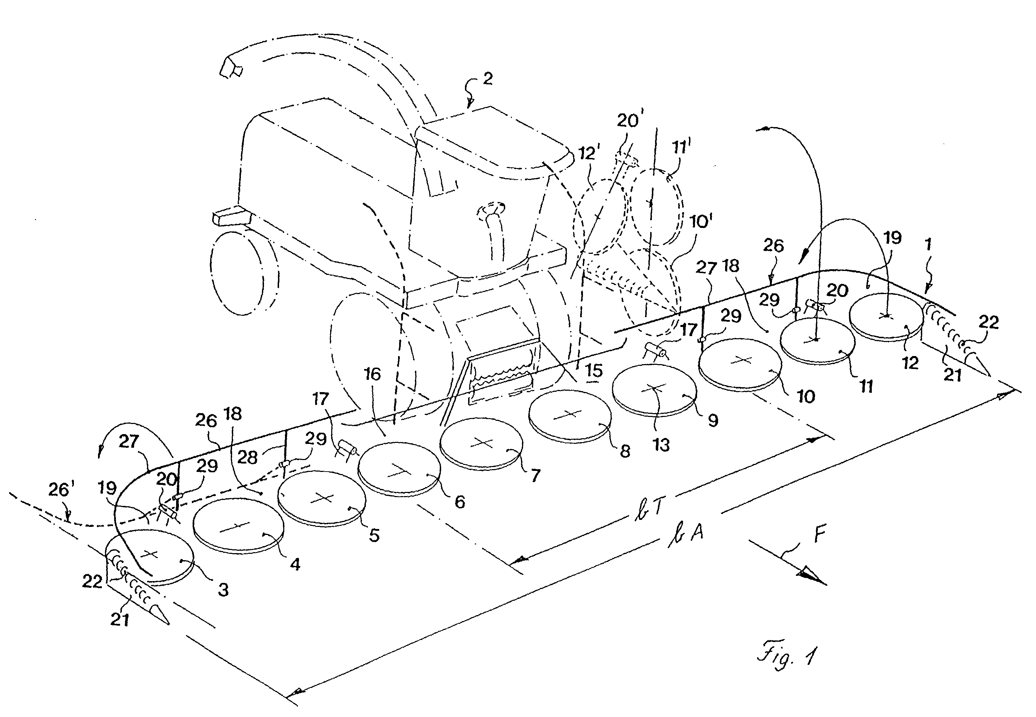

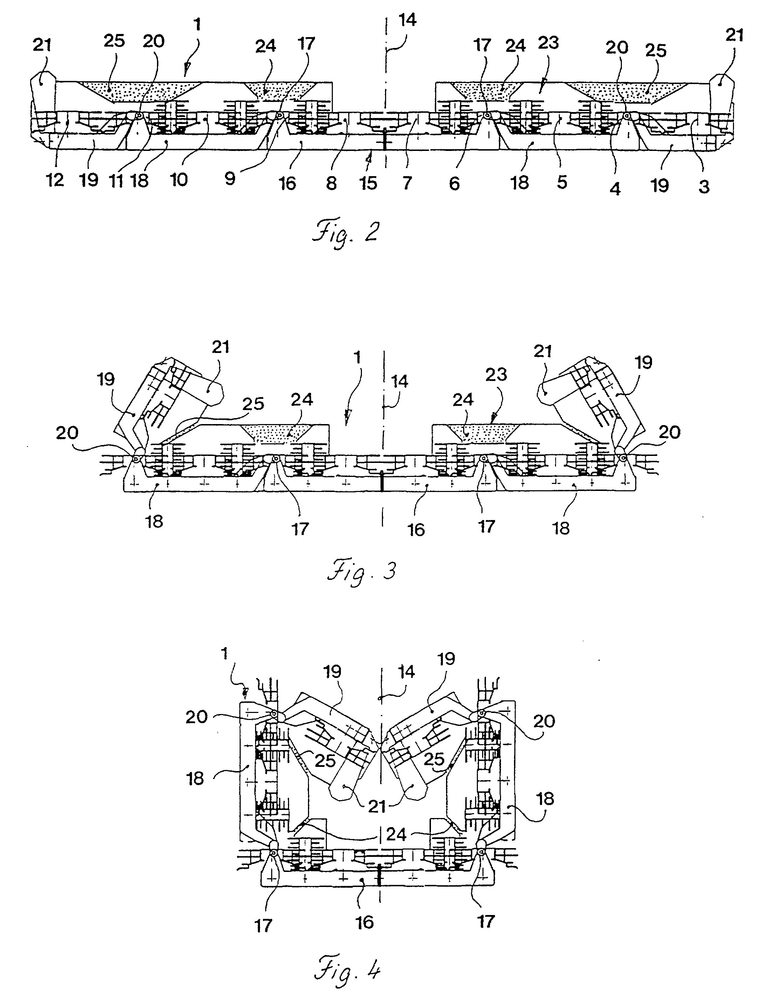

Die gemäß Fig. 1 in Arbeits- bzw. Fahrtrichtung gemäß dem Pfeil F vorbewegte, als ganzes mit 1 bezeichnete Mähmaschine kann, wie dargestellt, als Selbstfahrer in Verbindung mit einem als ganzes mit 2 bezeichneten Feldhäcksler oder aber als Anbaugerät für einen Schlepper ausgebildet sein und umfaßt bei dem dargestellten Beispiel insgesamt zehn Einzugs- und Mähtrommeln 3 bis 12, die eine untereinander gleiche Ausbildung mit einem unteren Rotormesser und Mitnehmerzähnen für das geschnittene Halmgut aufweisen können und mit ihren im wesentlichen vertikalen Drehachsen 13 in einer gemeinsamen Querebene symmetrisch beidseits einer mittleren Vertikalebene 14 (Fig. 2 bis 4) der Mähmaschine 1 an einem Grundrahmen 15 abgestützt sind.

Der nach vorn, in Fahrtrichtung F, offene Grundrahmen 15 umfaßt ein festes Mittelteil 16 und zwei randseitig an diesem über je ein Drehgelenk 17 angelenkte Seitenteile 18 sowie ferner zwei Außenteile 19, die ihrerseits über je ein Drehgelenk 20 an den Außenrand des jeweils angrenzenden Seitenteils 18 angelenkt sind. Von den insgesamt zehn Einzugs- und Mähtrommeln 3 bis 12 sind die vier Trommeln 6,7,8 und 9 auf dem Mittelteil 16, die jeweiligen beiden Trommeln 4,5 und 10,11 auf dem zugehörigen Seitenteil 18 und die beiden äußeren Trommeln 3 und 12 auf dem jeweiligen Außenteil 19 des Grundrahmens 16 abgestützt. Die seitlich von Blatthebern 21 mit Teilerschnecke 22 begrenzte Gesamtarbeitsbreite b_{A} der Mähmaschine 1 beträgt bei dem dargestellten Beispiel 7,5 m, während ihre Transportbreite b_{T} kleiner ist als 3 m.

Aus den Rückansichten der Mähmaschine 1 gemäß den Fig. 2 bis 4 ist ersichtlich, daß der Grundrahmen 15 an seiner Rückseite mit einer vertikalen Schutzblechwand 23 versehen ist, die gegenüber den Klappgelenken 17 und 20 des Grundrahmens 15 mit Zwischenteilen 24 und 25 versehen ist, die sich beim Verschwenken der Seiten- und Außenteile 18,19 des Grundrahmens 15 flach zusammenlegen, um eine gegenseitige enge Annäherung der Grundrahmenteile 16,18,19 mit ihren entsprechend geformten Schutzblechwandabschnitten zur Erzielung einer kompakten Transportstellung zu ermöglichen. Die Zwischenteile 24,25 können von elastisch verformbaren Schürzen aus Gummi dergleichen elastomerem Material gebildet sein.

Aus ihrer Arbeitsstellung gemäß Fig. 2, in der sich sämtliche Grundrahmenteile 16,18,19 mit den darauf abgestützten Einzugs- und Mähtrommeln 3 bis 12 in einer gemeinsamen Ebene befinden, wird über die Zwischenstellung gemäß Fig. 3 die Transportstellung gemäß Fig. 4 durch Verschwenken der Grundrahmenteile 18 und 19 um die Drehgelenke 17 und 20 des Grundrahmens 15 mit Hilfe hydraulischer Arbeitszylinder erreicht, die in nicht näher dargestellter Weise in den Gelenkbereichen zwischen den gegeneinander zu verschwenkenden Grundrahmenteilen 16,18,19 angelenkt sind.

Die Arbeitszylinder sind doppeltwirkend ausgebildet und selbstverriegelnd sowie derart in Reihe geschaltet, daß bei ihrer Betätigung zur Herbeiführung der Transportstellung zunächst die beiden Arbeitszylinder der Außenteile 19 angesteuert werden, um diese über die Drehgelenke 20 gegenüber den Seitenteilen 18 um einen Winkel von etwa 120°, d.h. nach oben und innen zu verschwenken. Diese Zwischenstellung ist aus Fig. 3 ersichtlich, die außerdem erkennen läßt, daß die elastisch verformbaren Zwischenteile 25 bei dieser Schwenkbewegung flach zusammengelegt worden sind.

Die weitere Betätigung des Arbeitszylindersystems führt zum Verschwenken der Seitenteile 18 um die Drehgelenke 17 um 90° gegenüber dem ortsfesten Mittelteil 16. Die Außenteile 19 werden dabei in ihrer gehaltenen Winkelstellung mitgenommen, so daß die Transportstellung der Mähmaschine 1 gemäß Fig. 4 erreicht wird. Der Schwerpunkt der Maschine verlagert sich dabei im wesentlichen nur in der Höhe. Fig. 4 verdeutlicht dabei wiederum, daß die elastisch verformbaren Zwischenteile 24 bei der Schwenkbewegung flach zusammengelegt worden sind, so daß die kompakte, in sich stabile symmetrische Transportstellung entsteht, die im übrigen auch in Fig. 1 für das Seitenteil 18 und das Außenteil 19 der rechten Maschinenhälfte gestrichelt dargestellt ist.

Die Fig. 1 und 5 bis 7 veranschaulichen als ein weiteres Ausrüstungsdetail der Mähmaschine 1 zwei Vordruckbügel 26, die den Grundrahmen 15 übergreifen und an dessen Seitenteilen 18 schwenkbar abgestützt sind. Hierzu umfassen die gestängeartig ausgebildeten Vordruckbügel 26 einen in Arbeitsstellung oberen, im wesentlichen waagerechten Gestängeteil 27 und senkrechte Gestängeteile 28, die in Klappgelenken 29 des Grundrahmens 15 schwenkbar gelagert sind.

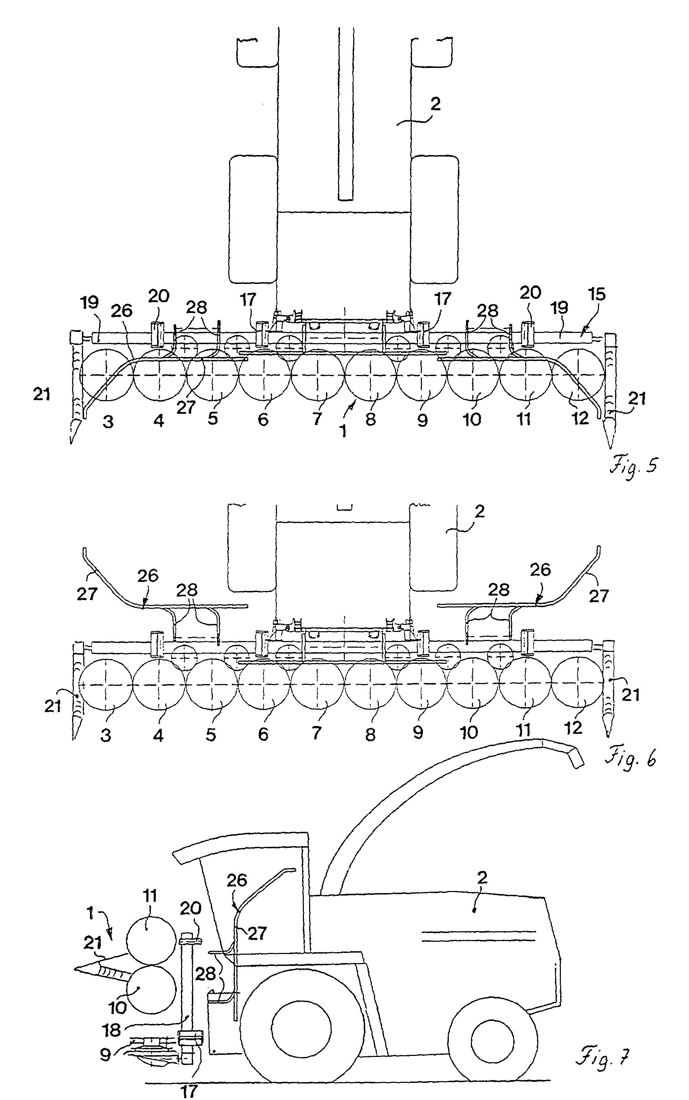

Die Vordruckbügel 26, die im Mähbetrieb das Erntegut nach vorn drücken, sind aus der Arbeitsstellung gemäß den Fig. 1 und 5 über die Klappgelenke 29 nach hinten in eine mit dem zugehörigen Seitenteil 18 im wesentlichen gleichebenige Ruhestellung verschwenk- und in dieser festlegbar, so daß sie bei Hochklappen der Seitenteile 18 gemeinsam mit diesen in die Transportstellung verschwenkt werden können. Die nach hinten verschwenkte Ruhestellung der Vordruckbügel 26 bei noch nicht hochgeklappten Seitenteilen 18 ist aus Fig. 6 ersichtlich, während Fig. 7 den hochgeklappten Zustand der Seitenteile 18, d.h. die Transportstellung, zeigt, in der die Vordruckbügel 26 vom Grundrahmen 15 bzw. den Seitenteilen 18 nach hinten versetzt beidseitig an die Seiten des die Mähmaschine 1 abstützenden und antreibenden Feldhäckslers 2 angrenzen.

Weder durch die hoch- und nach hinten geklappten Vordruckbügel 26 noch durch die hochgeklappten Seitenteile 18 mit den Einzugs- und Mähtrommeln 4,5 und 10,11 noch durch die hoch- und einwärtsgeklappten Außenteile 19 mit den Einzugs- und Mähtrommeln 3,12 wird in der Transportstellung der Mähmaschine 1 die Sicht des Fahrers des Feldhäckslers 2 oder dgl. landwirtschaftlichen Fahrzeug aufgrund der niedrig gehaltenen kompakten Transportanordnung beeinträchtigt, und in jedem Fall ist eine das zulässige Maß für den Straßentransport nicht überschreitende Breite der Mähmaschine 1 gewährleistet.

## Patentansprüche

1. Maschine zum Mähen von Mais und dgl. stengelartigem Erntegut, mit einer Reihe von um im wesentlichen vertikale Achsen rotierenden Einzugs- und Mähtrommeln, die in Querausrichtung beidseits einer mittleren Vertikalebene der Maschine an einem Grundrahmen abgestützt sind, der ein festes Mittelteil und zwei randseitig an diesen angelenkte Seitenteile umfaßt, die aus einer mit dem Mittelteil gleichebenigen Arbeitsstellung in eine um etwa 90° gegenüber diesem hochgeklappte Transportstellung verschwenkbar sind, **dadurch gekennzeichnet, daß** der Grundrahmen (15) zusätzlich zwei Außenteile (19) umfaßt, die jeweils an den Außenrand des angrenzenden Seitenteils (18) angelenkt und aus einer mit dem Mittelteil (16) und den Seitenteilen (18) gleichebenigen Arbeitsstellung in eine hochgeklappte, gegenüber dem seinerseits hochgeklappten Seitenteil (18) einwärts verlagerte Transportstellung oberhalb des Mittelteils (16) verschwenkbar sind.

2. Maschine nach Anspruch 1, **dadurch gekennzeichnet, daß** der Verschwenkwinkel der Außenteile (19 gegenüber dem jeweils angrenzenden Seitenteil (18) zumindest 90° beträgt.

3. Maschine nach Anspruch 2, **dadurch gekennzeichnet, daß** der Verschwenkwinkel im Bereich von 110° bis 130° liegt.

4. Maschine nach einem der Ansprüche 1 bis 3, **dadurch gekennzeichnet, daß** sie insgesamt zehn Einzugs- und Mähtrommeln (3-12) für eine Gesamtarbeitsbreite von etwa 7,50 m umfaßt, von denen vier Trommeln (6-9) auf dem Mittelteil (16), je zwei Trommeln (4,5;10,11) auf den Seitenteilen (18) und je eine Trommel (3;12) auf den Außenteilen (19) abgestützt sind.

5. Maschine nach einem der Ansprüche 1 bis 4, **dadurch gekennzeichnet, daß** der Grundrahmen (15) an seiner Rückseite mit einer vertikalen Schutzblechwand (23) versehen ist, die flach zusammenlegbare Zwischenteile (23,25) gegenüber Klappgelenken (17,20) des Grundrahmens (15) für die Verschwenkung seiner Seiten- und Außenteile (18,19) umfaßt.

6. Maschine nach Anspruch 5, **dadurch gekennzeichnet, daß** die Zwischenteile (24,25) von elastisch verformbaren Schürzen gebildet sind.

7. Maschine nach Anspruch 6, **dadurch gekennzeichnet, daß** die Schürzen aus Gummi oder dgl. elastomerem Material bestehen.

8. Maschine nach einem der Ansprüche 1 bis 7, **dadurch gekennzeichnet, daß** der Grundrahmen (15) rückseitig von Vordruckbügeln (26) übergriffen ist, die an den Seitenteilen (18) des Grundrahmens (15) schwenkbar abgestützt sind.

9. Maschine nach Anspruch 8, **dadurch gekennzeichnet, daß** die Vordruckbügel (26) aus einer im wesentlichen vertikalen Arbeitsstellung in eine mit ihrem zugehörigen Seitenteil (18) im wesentlichen gleichebenige Ruhestellung für ein gemeinsames Hochklappen mit diesem in die Transportstellung verschwenkbar sind.

10. Maschine nach Anspruch 9, **dadurch gekennzeichnet, daß** die Vordruckbügel (26) in ihrer Transportstellung vom Grundrahmen (15) nach hinten versetzt beidseitig an die Seiten eines die Maschine (1) abstützenden und antreibenden landwirtschaftlichen Fahrzeugs (2) angrenzen.

## Claims

1. A machine for cutting maize and like stalk crops, with a row of intake and cutting drums rotating about substantially vertical axes, which are supported in transverse alignment on a base frame on both sides of a central vertical plane of the machine, the frame comprising a fixed middle part and two side parts pivoted on this at the sides, the side parts being pivotable out of a working position in the same plane as the middle part into a transport position folded up through approximately 90° relative thereto, **characterized in that** the base frame (15) additionally comprises two outer parts (19) which are each pivoted on the outer edge of the adjoining side part (18) and can be pivoted out a working position is the same plane as the middle part (16) and the side parts (18) into a transport position folded up relative to the side parts (18) themselves folded up above the middle part (16) and displaced to the inside.

2. A machine according to claim 1, **characterized in that** the pivoting angle of the outer parts (19) relative to the respective adjoining side parts (18) amounts to at least 90°.

3. A machine according to claim 2, **characterized in that** the pivoting angle lies in the range from 110° to 130°.

4. A machine according to any of claims 1 to 3, **characterized in that** it comprises a total of ten intake and cutting drums (3 - 12) for a total working width of about 7.5 m, of which four drums (6 - 9) are supported on the middle part (16), two drums (4, 5; 10, 11) are supported on each of the side parts (18) and one drum (3; 12) is supported on each of the outer parts (19).

5. A machine according to any of claims 1 to 4, **characterized in that** the base frame (15) is provided on its rear side with a vertical protective sheet material wall (23) which comprises intermediate parts (23, 25) opposite fold hinges (17, 20) of the base frame (15), which can be folded flat for the pivoting of its side and outer parts (18, 19).

6. A machine according to claim 5, **characterized in that** the intermediate parts (24, 25) are formed from elastically deformable aprons.

7. A machine according to claim 6, **characterized in that** the aprons consist of rubber or like elastomeric material.

8. A machine according to any of claims 1 to 7, **characterized in that** the base frame (15) is overlapped at the rear side by forwardly pressing frames (16) which are pivotally supported on the side parts (18) of the base frame (15).

9. A machine according to claim 8, **characterized in that** the forwardly pressing frames (26) can be pivoted out of a substantially vertical working position into a rest position substantially in the same plane as the side part (18) corresponding thereto, for folding up therewith into the transport position.

10. A machine according to claim 9, **characterized in that** the forwardly pressing frames (26) are offset to the rear from the base frame (15) in their transport position, on both sides, at the sides of an agricultural vehicle (2) supporting and driving the machine (1).

## Revendications

1. Machine pour faucher le maïs ou une matière à récolter similaire en forme de tiges, comportant une série de tambours d'entrée et de fauchage, qui tournent autour d'axes essentiellement verticaux et qui sont supportés dans la direction transversale des deux côtés d'un plan médian vertical de la machine, sur un cadre de base qui comprend une partie centrale fixe et deux parties latérales articulées au niveau des bords sur la partie centrale et qui peuvent pivoter depuis une position de travail, dans laquelle elles sont dans le même plan que la partie centrale, pour venir dans une position de transport rabattue vers le haut sur environ 90° par rapport à la position précédente, **caractérisé en ce que** le cadre de base (15) comprend en outre deux parties extérieures (19), qui sont articulées respectivement sur le bord extérieur de la partie latérale contiguë (18) et peuvent pivoter depuis la position de travail, qui est située dans le même plan que la partie centrale (16) et que les parties latérales (18), pour venir dans une position de transport relevée, qui est décalée vers l'intérieur par rapport à la partie latérale (18) qui pour sa part est relevée, et ce au-dessus de la partie centrale (16).

2. Machine selon la revendication 1, **caractérisée en ce que** l'angle de pivotement des parties extérieures (19) par rapport à la partie latérale respectivement contiguë (18) est égale au moins à 90°.

3. Machine selon la revendication 2, **caractérisée en ce que** l'angle de pivotement se situe dans la gamme allant de 110° à 130°.

4. Machine selon l'une des revendications 1 à 3, **caractérisée en ce qu'**elle comprend globalement dix tambours d'entrée et de fauchage (3-12) pour une largeur de travail totale d'environ 7,50 m, parmi lesquels quatre tambours (6-9) prennent appui sur la partie centrale (16), deux tambours respectifs (4, 5; 10, 11) prennent appui sur les parties latérales (18) et respectivement un tambour (3; 12) prend appui sur les parties extérieures (19).

5. Machine selon l'une des revendications 1 à 4, **caractérisée en ce que** le cadre de base (14) comporte, sur son côté arrière, une paroi en tôle verticale de protection (23), qui comprend des parties intermédiaires (23, 25), qui peuvent être repliées à plat par rapport à des articulations de rabattement (17, 20) du cadre de base (20) pour le pivotement des parties latérales et extérieures 18, 19) de ce cadre.

6. Machine selon la revendication 5, **caractérisée en ce que** des éléments intercalaires (24, 25) sont formés par des tabliers déformables élastiquement.

7. Machine selon la revendication 6, **caractérisée en ce que** les tabliers sont réalisés en caoutchouc ou en un matériau élastomère analogue.

8. Machine selon l'une des revendications 1 à 7, **caractérisée en ce que** sur le côté arrière du cadre de base (15) s'engagent des étriers de serrage avant (26) qui prennent appui, de manière à pouvoir pivoter, sur les parties latérales (18) du corps de base (15).

9. Machine selon la revendication 8, **caractérisée en ce que** les étriers de serrage avant (26) peuvent pivoter depuis une position de travail essentiellement verticale pour venir dans une position de repos située essentiellement dans le même plan que la partie latérale (18) qui leur est associée, pour un relèvement commun avec cette partie latérale dans la position de transport.

10. Machine selon la revendication 9, **caractérisée en ce que** dans leur position de transport, les étriers de serrage avant (26) jouxtent les deux côtés, en étant décalés vers l'arrière par rapport au cadre de base (15), les côtés d'un véhicule agricole (2) qui supportent la machine (1) et l'entraînent.
